(19) Europäisches Patentamt
European Patent Office
Office européen des brevets

(11) **EP 3 425 523 A1**

(12) **EUROPEAN PATENT APPLICATION**
published in accordance with Art. 153(4) EPC

(43) Date of publication:
**09.01.2019 Bulletin 2019/02**

(51) Int Cl.:
***G06F 17/30*** (2006.01)

(21) Application number: **17759124.5**

(22) Date of filing: **17.02.2017**

(86) International application number:
**PCT/CN2017/073867**

(87) International publication number:
**WO 2017/148273 (08.09.2017 Gazette 2017/36)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **29.02.2016 CN 201610113706**

(71) Applicant: **Alibaba Group Holding Limited Grand Cayman (KY)**

(72) Inventors:
• **HUANG, Guangyuan**
  **Hangzhou, Zhejiang 311121 (CN)**
• **CHEN, Depin**
  **Hangzhou, Zhejiang 311121 (CN)**
• **LIU, Suyu**
  **Hangzhou, Zhejiang 311121 (CN)**

(74) Representative: **Finnegan Europe LLP**
  **1 London Bridge**
  **London SE1 9BG (GB)**

(54) **APPLICATION PROGRAM CLASSIFICATION METHOD AND APPARATUS**

(57)  Embodiments of the present application provide an application classification method and apparatus. The method includes: calculating a correlation coefficient between to-be-classified applications, wherein the to-be-classified applications are located in one or more known classification systems; constructing a node diagram for the to-be-classified applications based on the correlation coefficient; and dividing the node diagram to obtain one or more classification diagrams. As such, full reference is made to experience of a plurality of currently known classification systems for integration, and no manual operation is required. Therefore, a subjective classification result obtained due to a manual operation or a risk that operation personnel fail to take adequate consideration can be avoided, and a new comprehensive application classification system can be provided.

```
┌─────────────────────────────────────────────────────────────┐
│ Calculate a correlation coefficient between to-be-classified  │── 101
│                      applications                             │
└─────────────────────────────────────────────────────────────┘
                              │
                              ▼
┌─────────────────────────────────────────────────────────────┐
│ Construct a node diagram for the to-be-classified applications│── 102
│               based on the correlation coefficient            │
└─────────────────────────────────────────────────────────────┘
                              │
                              ▼
┌─────────────────────────────────────────────────────────────┐
│ Divide the node diagram to obtain one or more classification  │── 103
│                          diagrams                             │
└─────────────────────────────────────────────────────────────┘
```

**FIG. 1**

**Description**

The present application claims priority to Chinese Patent Application No. 201610113706.8 filed on February 29, 2016 and entitled "APPLICATION CLASSIFICATION METHOD AND APPARATUS", which is incorporated herein by reference in its entirety.

**Technical Field**

The present application relates to the field of computer processing technologies, and in particular, to an application classification method and an application classification apparatus.

**Background Art**

With the popularization of smart terminal devices, an increasing number of different applications is provided for use on the terminal devices. Users can acquire required applications from various application stores, such as Wandoujia and Huawei App Store.

At present, all applications in application stores are classified based on certain categories to facilitate downloading for users. However, different systems usually have different classification methods. For example, a classification system of Wandoujia is not exactly the same as a classification system of Huawei App Store. As a result, differences may exist in the total number of application categories, classification levels, and the like. Therefore, when various applications need to be managed, a single classification system may fail to meet our requirements, and operation personnel still need to perform manual classification. As a result, the workload of classification operations is large, classification results are subjective, and there are risks such as inadequate consideration.

**SUMMARY**

In view of the foregoing problem, embodiments of the present application are proposed to provide an application classification method and a corresponding application classification apparatus to overcome the foregoing problem or at least partially solve the foregoing problem.

To solve the foregoing problem, the present application discloses an application classification method, including:

calculating a correlation coefficient between to-be-classified applications, wherein the to-be-classified applications are located in one or more known classification systems;
constructing a node diagram for the to-be-classified applications based on the correlation coefficient; and
dividing the node diagram to obtain one or more classification diagrams.

Optionally, the step of calculating a correlation coefficient between to-be-classified applications includes:

separately determining a shortest path between any two to-be-classified applications in the one or more known classification systems; and
calculating a correlation coefficient between the any two to-be-classified applications by using the shortest path.

Optionally, the correlation coefficient between the any two to-be-classified applications is calculated by using the following formula:

$$w(a,b) = \frac{1}{n} * \sum_{n=1}^{n} \left( \frac{2}{shortes\_path(a,b)} \right)$$

wherein $w(a,b)$ is a correlation coefficient between to-be-classified applications $a$ and $b$; n is the number of known classification systems; and
$shortest\_path(a,b)$ is a shortest path between the to-be-classified applications $a$ and $b$ in a known classification system.

Optionally, the step of constructing a node diagram for the to-be-classified applications based on the correlation coefficient includes:

using the correlation coefficient as a weight of a side between the to-be-classified applications; and
constructing the node diagram for the to-be-classified applications based on the weight of the side.

Optionally, the step of dividing the node diagram to obtain one or more classification diagrams includes:

judging whether a weight of a side in the node diagram is greater than a preset threshold;
retaining the corresponding side if the weight of the side is greater than the preset threshold, or deleting the corresponding side to obtain a new node diagram if the weight of the side is not greater than the preset threshold; and
dividing the new node diagram to obtain the one or more classification diagrams.

Optionally, the step of dividing the new node diagram to obtain the one or more classification diagrams includes:

configuring a label for each to-be-classified application in the new node diagram;
transferring the label of each to-be-classified application to a connected to-be-classified application;
selecting, in labels received by each to-be-classified application, a label as an owned label based on the number of the labels;
judging, in the new node diagram, whether a label owned by a to-be-classified application changes, or whether the current number of iteration times is less than a preset maximum number of iteration times; and
returning to the step of transferring the label of each to-be-classified application to a connected to-be-classified application if the label owned by the to-be-classified application changes or the current number of iteration times is less than the preset maximum number of iteration times; or
putting to-be-classified applications owning the same label to the same classification diagram to obtain the one or more classification diagrams if the label owned by the to-be-classified application does not change or the current number of iteration times is not less than the preset maximum number of iteration times.

Optionally, the method further includes:

merging the one or more classification diagrams; or
further dividing the one or more classification diagrams.

Optionally, the step of further dividing the one or more classification diagrams includes:

calculating betweenness of a side between applications in the classification diagram;
deleting a side corresponding to a maximum betweenness value to obtain classification sub-diagrams;
judging whether the classification sub-diagrams are two connected diagrams; and
returning to the step of calculating betweenness of a side between applications in the classification diagram if the classification sub-diagrams are not two connected diagrams; or
stopping further division of the classification diagram if the classification sub-diagrams are two connected diagrams.

Optionally, the betweenness of the side between the applications in the classification diagram is calculated by using the following formula:

$$B(e) = \frac{p}{q}$$

wherein $B(e)$ is a betweenness value corresponding to a side $e$; $q$ is the number of all shortest paths in the classification diagram; and p is the number of shortest paths including the side e.

To solve the foregoing problem, the present application discloses an application classification apparatus, including:

a correlation coefficient calculation module configured to calculate a correlation coefficient between to-be-classified applications, wherein the to-be-classified applications are located in one or more known classification systems;
a node diagram construction module configured to construct a node diagram for the to-be-classified applications based on the correlation coefficient; and
a node diagram division module configured to divide the node diagram to obtain one or more classification diagrams.

Optionally, the correlation coefficient calculation module includes:

a shortest path determining sub-module configured to separately determine a shortest path between any two to-be-classified applications in the one or more known classification systems; and

a correlation coefficient calculation sub-module configured to calculate a correlation coefficient between the any two to-be-classified applications by using the shortest path.

Optionally, the correlation coefficient between the any two to-be-classified applications is calculated by using the following formula:

$$w(a,b) = \frac{1}{n} * \sum_{n=1}^{n} (\frac{2}{shortes\_path(a,b)})$$

wherein $w(a,b)$ is a correlation coefficient between to-be-classified applications $a$ and $b;$ n is the number of known classification systems; and
$shortest\_path(a,b)$ is a shortest path between the to-be-classified applications $a$ and $b$ in a known classification system.

Optionally, the node diagram construction module includes:
a node diagram construction sub-module configured to use the correlation coefficient as a weight of a side between the to-be-classified applications, and construct the node diagram for the to-be-classified applications based on the weight of the side.
Optionally, the node diagram division module includes:

a side weight judging sub-module configured to judge whether a weight of a side in the node diagram is greater than a preset threshold;
a first corresponding side deletion sub-module configured to retain the corresponding side when the weight of the side is greater than the preset threshold, or delete the corresponding side to obtain a new node diagram when the weight of the side is not greater than the preset threshold; and
a node diagram division sub-module configured to divide the new node diagram to obtain the one or more classification diagrams.

Optionally, the node diagram division sub-module includes:

a configuration unit configured to configure a label for each to-be-classified application in the new node diagram;
a transfer unit configured to transfer the label of each to-be-classified application to a connected to-be-classified application;
a selection unit configured to select, in labels received by each to-be-classified application, a label as an owned label based on the number of the labels;
a judging unit configured to judge, in the new node diagram, whether a label owned by a to-be-classified application changes, or whether the current number of iteration times is less than a preset maximum number of iteration times;
a return unit configured to return to the step of transferring, by the transfer unit, the label of each to-be-classified application to a connected to-be-classified application when the label owned by the to-be-classified application changes or the current number of iteration times is less than the preset maximum number of iteration times; and
a division unit configured to put to-be-classified applications owning the same label to the same classification diagram to obtain the one or more classification diagrams when the label owned by the to-be-classified application does not change or the current number of iteration times is greater than or equal to the preset maximum number of iteration times.

Optionally, the apparatus further includes:

a classification diagram merging module configured to merge the one or more classification diagrams; and
a classification diagram division module configured to further divide the one or more classification diagrams.

Optionally, the classification diagram division module includes:

a side betweenness calculation sub-module configured to calculate betweenness of a side between applications in the classification diagram;

a second corresponding side deletion sub-module configured to delete a side corresponding to a maximum betweenness value to obtain classification sub-diagrams;

a connected diagram judging sub-module configured to judge whether the classification sub-diagrams are two connected diagrams;

a return sub-module configured to return to the step of calculating betweenness of a side between applications in the classification diagram when the classification sub-diagrams are not two connected diagrams; and

a stop sub-module configured to stop further division of the classification diagram when the classification sub-diagrams are two connected diagrams.

Optionally, the betweenness of the side between the applications in the classification diagram is calculated by using the following formula:

$$B(e) = \frac{p}{q}$$

wherein *B(e)* is a betweenness value corresponding to a side *e; q* is the number of all shortest paths in the classification diagram; and p is the number of shortest paths including the side e.

Compared with the prior art, the embodiments of the present application have the following advantages:

In the embodiments of the present application, a correlation coefficient between to-be-classified applications is calculated, a node diagram is constructed based on the correlation coefficient, and then the node diagram is divided to obtain one or more classification diagrams. As such, full reference is made to experience of a plurality of currently known classification systems for integration, and no manual operation is required. Therefore, a subjective classification result obtained due to a manual operation or a risk that operation personnel fail to take adequate consideration can be avoided, and a new comprehensive application classification system can be provided.

In addition, in the embodiments of the present application, after a new application classification system is obtained, a new classification diagram may be further assessed depending on an actual need, and a merging or further division operation may be performed to ensure accuracy of final classification.

## BRIEF DESCRIPTION OF THE DRAWINGS

FIG. 1 is a flowchart of steps of a first embodiment of an application classification method according to the present application;

FIG. 2 is a schematic diagram of application classification in an application store according to an existing technology;

FIG. 3A is a schematic diagram of a known classification system A according to the present application;

FIG. 3B is a schematic diagram of another known classification system B according to the present application;

FIG. 4 is a flowchart of steps of a second embodiment of an application classification method according to the present application;

FIG. 5 is a schematic diagram of a node diagram according to the present application;

FIG. 6 is a schematic diagram of a classification diagram according to the present application; and

FIG. 7 is a structural block diagram of an application classification apparatus according to the present application.

## DETAILED DESCRIPTION

To make the foregoing objectives, features, and advantages of the present application more comprehensible, the present application is described in further detail in the following with reference to the accompanying drawings and specific implementation manners.

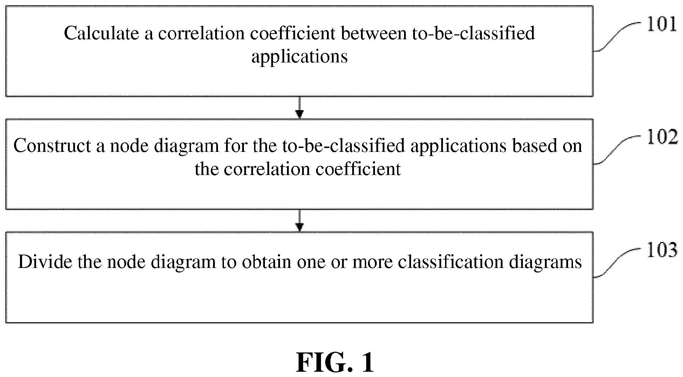

Referring to FIG. 1, a flowchart of steps of a first embodiment of an application classification method according to the present application is shown. The application classification method may specifically include the following steps:

Step 101. A correlation coefficient between to-be-classified applications is calculated.

In this embodiment of the present application, when a new application classification system needs to be constructed, full reference may be made to experience of a plurality of currently known classification systems for integration to provide a new comprehensive application classification system, thus reducing the workload of manual operations. Therefore, the to-be-classified applications may be applications located in one or more known classification systems.

Specifically, a correlation coefficient between to-be-classified applications can be calculated first. The correlation coefficient reflects correlation between any two applications. Generally, a larger correlation coefficient means that two applications are more correlated.

In a preferred embodiment of the present application, the step of calculating a correlation coefficient between to-be-classified applications may specifically include the following substeps:

Substep 1011. A shortest path between any two to-be-classified applications in the one or more known classification systems is separately determined.

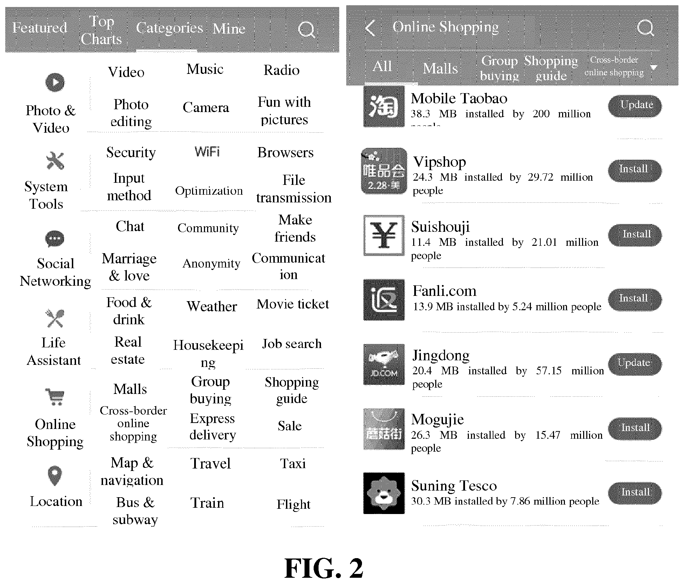

FIG. 2 is a schematic diagram of application classification in an application store according to an existing technology. Generally, applications may be classified into categories such as Photo & Video, System Tools, Social Networking and the like. Each category may be further divided into different subcategories. For example, a category of Online Shopping may be divided into different subcategories such as Malls, Group buying, Shopping guide, and Cross-border online shopping. Each subcategory may include specific applications such as Mobile Taobao™, Fanli.com, and Suning Tesco. For ease of understanding, in embodiments of the present application, a node diagram is used to represent a classification status in an application store, and nodes in the node diagram each represent a specific category or application.

Therefore, if applications are considered as nodes in a current classification system, a shortest path between any two to-be-classified applications in the classification system can indicate a distance between two nodes. Generally, a shorter distance between nodes means higher correlation.

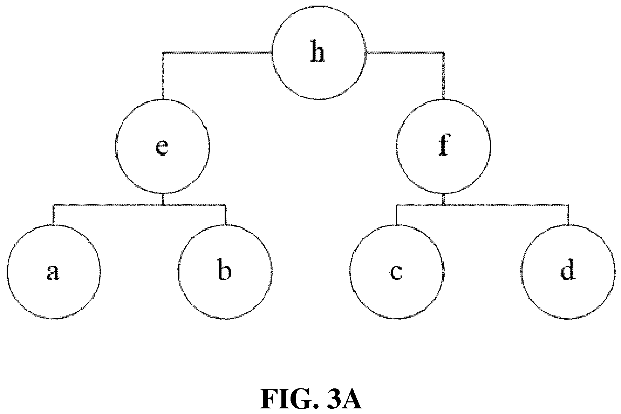

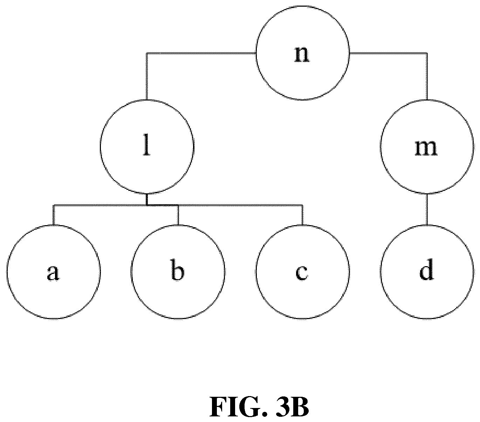

FIG. 3A and FIG. 3B are schematic diagrams of two different classification systems A and B, wherein e, f, h, 1, m, and n represent different categories, and a, b, c, and d are to-be-classified applications. For example, for the applications a and b, a shortest path Shortest_path(a,b) between the applications a and b in the classification system A is 2, while a shortest path Shortest_path(a,b) between the applications a and b in the classification system B is also 2. For the applications a and c, a shortest path Shortest_path(a,c) between the applications a and c in the classification system A is 4, while a shortest path Shortest_path(a,c) between the applications a and c in the classification system B is 2.

In a specific implementation, shortest paths between different nodes in classification systems may be obtained by using a Dijkstra algorithm.

Substep 1012. A correlation coefficient between the any two to-be-classified applications is calculated by using the shortest path.

In a specific implementation, the correlation coefficient between the any two to-be-classified applications is calculated by using the following formula:

$$w(a,b) = \frac{1}{n} * \sum_{n=1}^{n} (\frac{2}{shortes\_path(a,b)})$$

wherein *w(a,b)* is a correlation coefficient between to-be-classified applications *a* and *b;* n is the number of known classification systems; and

*shortest_path(a,b)* is a shortest path between the to-be-classified applications *a* and *b* in a known classification system.

Therefore, for the applications a and b in the classification system A and the classification system B, it can be obtained by using the foregoing formula that a correlation coefficient between a and b is w(a,b)=1, and a correlation coefficient between a and c is w(a,c)=0.75.

Step 102. A node diagram is constructed for the to-be-classified applications based on the correlation coefficient.

In this embodiment of the present application, after correlation coefficients between all to-be-classified applications are separately obtained, a node diagram may be constructed for the to-be-classified applications based on the correlation coefficients. In the node diagram, nodes represent different applications, and a connection line between nodes may represent a relationship between applications.

In a specific implementation, the correlation coefficient between the applications that is obtained in step 101 can be used as a weight of a side between the to-be-classified applications, and a node diagram is constructed for the to-be-classified applications based on the weight of the side. Generally, in the constructed node diagram, a larger weight between nodes means that the nodes are more correlated in a plurality of classification systems. For example, if two applications keep belonging to the same subcategory in a plurality of classification systems, a weight between the two applications may have a maximum value of 1.

Step 103. The node diagram is divided to obtain one or more classification diagrams.

In a preferred embodiment of the present application, the step of dividing the node diagram to obtain one or more classification diagrams may specifically include the following substeps:

Substep 1031. It is judged whether a weight of a side in the node diagram is greater than a preset threshold.

Substep 1032. The corresponding side is retained if the weight of the side is greater than the preset threshold, or the corresponding side is deleted to obtain a new node diagram if the weight of the side is not greater than the preset threshold.

Substep 1033. The new node diagram is divided to obtain the one or more classification diagrams.

In a specific implementation, a weight threshold can first be set depending on an actual classification requirement, and then it is judged whether a weight of a side in the node diagram is greater than the preset threshold. The corresponding side is retained if the weight of the side is greater than the preset threshold, or the corresponding side is deleted to obtain a new node diagram if the weight of the side is not greater than the preset threshold. For example, if the preset threshold is 0.5, all sides in the node diagram that have a weight value less than 0.5 may be first deleted to obtain a new node diagram, and then the new node diagram is further divided to obtain one or more classification diagrams.

In the embodiment of the present application, a correlation coefficient between to-be-classified applications is calculated, a node diagram is constructed based on the correlation coefficient, and then the node diagram is divided to obtain one or more classification diagrams. As such, full reference is made to experience of a plurality of currently known classification systems for integration, and no manual operation is required. Therefore, a subjective classification result obtained due to a manual operation or a risk that operation personnel fail to take adequate consideration can be avoided, and a new comprehensive application classification system can be provided.

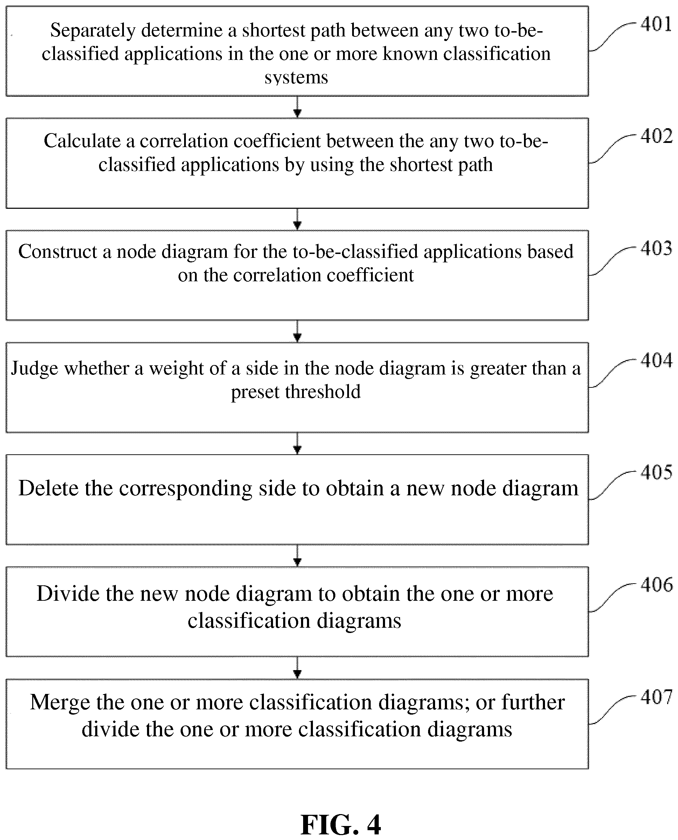

Referring to FIG. 4, a flowchart of steps of a second embodiment of an application classification method according to the present application is shown. The application classification method may specifically include the following steps:

Step 401. A shortest path between any two to-be-classified applications in the one or more known classification systems is separately determined.

In this embodiment of the present application, if applications are considered as nodes in a current classification system, a shortest path between any two to-be-classified applications in the classification system can indicate a distance between two nodes. Generally, a shorter distance between nodes means higher correlation. Therefore, for to-be-classified applications, a shortest path between any two to-be-classified applications in the one or more known classification systems can be separately determined first.

FIG. 3A and FIG. 3B are schematic diagrams of two different classification systems A and B, wherein e, f, h, 1, m, and n represent different categories, and a, b, c, and d are to-be-classified applications. For example, for the applications a and b, a shortest path Shortest_path(a,b) between the applications a and b in the classification system A is 2, while a shortest path Shortest_path(a,b) between the applications a and b in the classification system B is also 2. For the applications a and c, a shortest path Shortest_path(a,c) between the applications a and c in the classification system A is 4, while a shortest path Shortest_path(a,c) between the applications a and c in the classification system B is 2.

In a specific implementation, shortest paths between different nodes in classification systems may be obtained by using a Dijkstra algorithm.

Step 402. A correlation coefficient between the any two to-be-classified applications is calculated by using the shortest path.

In a specific implementation, after the shortest path between the any two to-be-classified applications is separately determined, a correlation coefficient between the any two to-be-classified applications may be calculated based on the shortest path by using the following formula:

$$w(a,b) = \frac{1}{n} * \sum_{n=1}^{n} (\frac{2}{shortes\_path(a,b)})$$

wherein $w(a,b)$ is a correlation coefficient between to-be-classified applications $a$ and $b;$ n is the number of known classification systems; and

$shortest\_path(a,b)$ is a shortest path between the to-be-classified applications $a$ and $b$ in a known classification system.

For example, for the applications a and b in the classification system A and the classification system B, it can be obtained by using the foregoing formula that a correlation coefficient between a and b is w(a,b)=1, and a correlation coefficient between a and c is w(a,c)=0.75.

Step 403. A node diagram is constructed for the to-be-classified applications based on the correlation coefficient.

In a preferred embodiment of the present application, the step of constructing a node diagram for the to-be-classified applications based on the correlation coefficient may specifically include the following substeps:

Substep 4031. The correlation coefficient is used as a weight of a side between the to-be-classified applications.
Substep 4032. The node diagram is constructed for the to-be-classified applications based on the weight of the side.

In a specific implementation, after a correlation coefficient between every two to-be-classified applications is obtained, the correlation coefficient may be used as a weight of a side for constructing a node diagram, that is, the any two applications are connected to obtain a side, thus constructing a node diagram. The correlation coefficient between the applications is used as a weight value of the corresponding side. Generally, in the constructed node diagram, a larger weight between nodes means that the nodes are more correlated in a plurality of classification systems. For example, if two applications keep belonging to the same subcategory in a plurality of classification systems, a weight between the two applications may have a maximum value of 1.

Step 404. It is judged whether a weight of a side in the node diagram is greater than a preset threshold.

In a specific implementation, a weight threshold may first be set depending on an actual classification requirement, and then it is judged whether a weight of a side in the node diagram is greater than the preset threshold. The corresponding side is retained if the weight of the side is greater than the preset threshold, or step 405 may be performed to delete the corresponding side to obtain a new node diagram if the weight of the side is not greater than the preset threshold. For example, if the preset threshold is 0.5, all sides in the node diagram that have a weight value less than 0.5 may be first deleted to obtain a new node diagram.

Step 405. The corresponding side is deleted to obtain a new node diagram.

Step 406. The new node diagram is divided to obtain the one or more classification diagrams.

In a specific implementation, the new node diagram may be divided by means of a community division algorithm FastUnfolding.

In a preferred embodiment of the present application, the step of dividing the new node diagram to obtain the one or more classification diagrams may specifically include the following sub steps:

Substep 4061. A label is configured for each to-be-classified application in the new node diagram.

In a specific implementation, for ease of calculation, the label may be a user ID of the to-be-classified application. Certainly, the label may alternatively be a label configured in another manner, for example, configured randomly, as long as the label is unique. No limitation is set thereto in the embodiment of the present application.

Substep 4062. The label of each to-be-classified application is transferred to a connected to-be-classified application.

Substep 4063. A label is selected, in labels received by each to-be-classified application, as an owned label based on the number of the labels.

Substep 4064. It is judged, in the new node diagram, whether a label owned by a to-be-classified application changes, or whether the current number of iteration times is less than a preset maximum number of iteration times.

Substep 4065. The step of transferring the label of each to-be-classified application to a connected to-be-classified application is returned to if the label owned by the to-be-classified application changes or the current number of iteration times is less than the preset maximum number of iteration times.

Substep 4066. To-be-classified applications owning the same label are put to the same classification diagram to obtain the one or more classification diagrams if the label owned by the to-be-classified application does not change or the current number of iteration times is not less than the preset maximum number of iteration times.

In the first iteration, a label may be randomly selected. Because a core node is connected to many other peripheral nodes, a probability that a label of the core node is randomly selected is relatively high. In subsequent iteration processes, the number of labels of the core node increases and gradually becomes stable.

When the labels are stable or maximum iteration times is reached, nodes having the same label belong to the same user group, and the label of the node may be used as an identification label of the application.

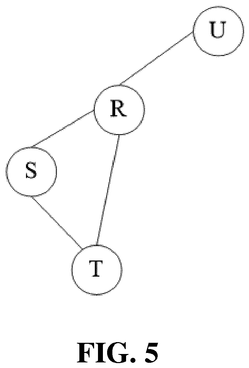

For example, FIG. 5 is a schematic diagram of a node diagram according to the present application, wherein a name of a node is used as a label of the node, that is, labels of nodes R, S, T, and U are respectively R, S, T, and U. An iteration process of the labels is as follows:

| Iteration times | Node | Received label | Selected label |
|---|---|---|---|
| 1 | R | S, T, U | U |
| | S | R, T | R |
| | T | R, S | S |
| | U | R | R |

(continued)

| Iteration times | Node | Received label | Selected label |
| --- | --- | --- | --- |
| 2 | R | R, R, S | R |
| | S | S, U | S |
| | T | R, U | R |
| | U | R | R |
| 3 | R | R, R, S | R |
| | S | R, R | R |
| | T | R, S | R |
| | U | R | R |

After the third iteration, labels owned by applications are all R, and do not change any more. Therefore, applications corresponding to the nodes R, S, T, and U belong to the same category, and may be put to the same classification diagram.

Certainly, in addition to the foregoing community division algorithm, another community division algorithm such as a Tommunity struTture in soTiRI RnU SiologiTRI networks (GN) algorithm and a LouvRin algorithm may be used. No limitation is set thereto in the embodiment of the present application.

Step 407. The one or more classification diagrams are merged; or the one or more classification diagrams are further divided.

In this embodiment of the present application, after a new classification diagram is obtained by using the foregoing method, the new classification diagram may be further processed. For example, the one or more classification diagrams are merged; or the one or more classification diagrams are further divided.

In a specific implementation, if a plurality of classification diagrams needs to be merged, the plurality of classification diagrams may be directly synthesized, and a hierarchical structure may be formed. For example, two original classification diagrams A and B can be synthesized as subcategories of a category C.

In a preferred embodiment of the present application, the step of further dividing the one or more classification diagrams may specifically include the following substeps:

Substep 4071. Betweenness of a side between applications in the classification diagram is calculated.

Substep 4072. A side corresponding to a maximum betweenness value is deleted to obtain classification sub-diagrams.

Substep 4073. It is judged whether the classification sub-diagrams are two connected diagrams.

Substep 4074. The step of calculating betweenness of a side between applications in the classification diagram is returned to if the classification sub-diagrams are not two connected diagrams.

Substep 4075. Further division of the classification diagram is stopped if the classification sub-diagrams are two connected diagrams.

In a specific implementation, the betweenness of the side between the applications in the classification diagram can be calculated by using the following formula:

$$B(e) = \frac{p}{q}$$

wherein $B(e)$ is a betweenness value corresponding to a side $e$; $q$ is the number of all shortest paths in the classification diagram; and p is the number of shortest paths including the side e.

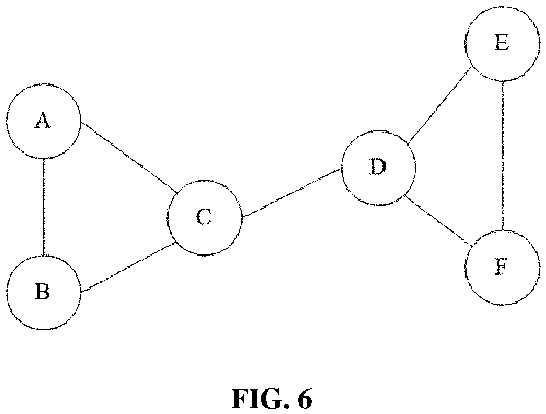

For example, FIG. 6 is a schematic diagram of a classification diagram according to the present application, and based on the foregoing formula, betweenness values of sides may be obtained as follows:

(1) AB: 1/30
(2) BC: 4/30
(3) AC: 4/30
(4) CD: 5/30

(5) DE: 4/30
(6) DF: 4/30

It can be learned through comparison that, the side CD has a maximum betweenness value, and therefore the side CD is deleted; after the side CD is deleted, the original classification diagram is divided into two connected diagrams, that is, classification sub-diagrams ABC and DEF, and a division effect is achieved. Therefore, further division of the classification diagram may be stopped.

In the embodiments of the present application, after a new application classification system is obtained, a new classification diagram may be further assessed depending on an actual need, and a merging or further division operation may be performed to ensure accuracy of final classification.

It should be noted that, for ease of description, the foregoing method embodiments are described as a series of action combinations. However, those skilled in the art should understand that the embodiments of the present application are not limited to the described sequence of the actions, because some steps may be performed in another sequence or at the same time according to the embodiments of the present application. In addition, those skilled in the art should also understand that the embodiments described in this specification all belong to preferred embodiments, and the involved actions are not necessarily mandatory to the embodiments of the present application.

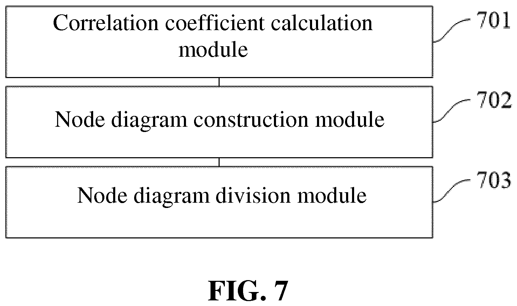

Referring to FIG. 7, a structural block diagram of an embodiment of an application classification apparatus according to the present application is shown. The application classification apparatus may specifically include the following modules:

a correlation coefficient calculation module 701 configured to calculate a correlation coefficient between to-be-classified applications, wherein the to-be-classified applications are located in one or more known classification systems;
a node diagram construction module 702 configured to construct a node diagram for the to-be-classified applications based on the correlation coefficient; and
a node diagram division module 703 configured to divide the node diagram to obtain one or more classification diagrams.

In this embodiment of the present application, the correlation coefficient calculation module 701 may specifically include the following sub-modules:

a shortest path determining sub-module 7011 configured to separately determine a shortest path between any two to-be-classified applications in the one or more known classification systems; and
a correlation coefficient calculation sub-module 7012 configured to calculate a correlation coefficient between the any two to-be-classified applications by using the shortest path.

In this embodiment of the present application, the correlation coefficient between the any two to-be-classified applications can be calculated by using the following formula:

$$w(a,b) = \frac{1}{n} * \sum_{n=1}^{n} \left( \frac{2}{shortes\_path(a,b)} \right)$$

wherein $w(a,b)$ is a correlation coefficient between to-be-classified applications $a$ and $b$; n is the number of known classification systems; and
$shortest\_path(a,b)$ is a shortest path between the to-be-classified applications $a$ and $b$ in a known classification system.

In this embodiment of the present application, the node diagram construction module 702 may specifically include the following sub-module:
a node diagram construction sub-module 7021 configured to use the correlation coefficient as a weight of a side between the to-be-classified applications, and construct the node diagram for the to-be-classified applications based on the weight of the side.

In this embodiment of the present application, the node diagram division module 703 may specifically include the following sub-modules:

a side weight judging sub-module 7031 configured to judge whether a weight of a side in the node diagram is greater than a preset threshold;

a first corresponding side deletion sub-module 7032 configured to retain the corresponding side when the weight of the side is greater than the preset threshold, or delete the corresponding side to obtain a new node diagram when the weight of the side is not greater than the preset threshold; and

a node diagram division sub-module 7033 configured to divide the new node diagram to obtain the one or more classification diagrams.

In this embodiment of the present application, the node diagram division sub-module 7033 may specifically include the following units:

a configuration unit 331 configured to configure a label for each to-be-classified application in the new node diagram;

a transfer unit 332 configured to transfer the label of each to-be-classified application to a connected to-be-classified application;

a selection unit 333 configured to select, in labels received by each to-be-classified application, a label as an owned label based on the number of the labels;

a judging unit 334 configured to judge, in the new node diagram, whether a label owned by a to-be-classified application changes, or whether the current number of iteration times is less than a preset maximum number of iteration times;

a return unit 335 configured to return to the step of transferring, by the transfer unit, the label of each to-be-classified application to a connected to-be-classified application when the label owned by the to-be-classified application changes or the current number of iteration times is less than the preset maximum number of iteration times; and

a division unit 336 configured to put to-be-classified applications owning the same label to the same classification diagram to obtain the one or more classification diagrams when the label owned by the to-be-classified application does not change or the current number of iteration times is greater than or equal to the preset maximum number of iteration times.

In this embodiment of the present application, the apparatus may further include the following modules:

a classification diagram merging module 704 configured to merge the one or more classification diagrams; and

a classification diagram division module 705 configured to further divide the one or more classification diagrams.

In this embodiment of the present application, the classification diagram division module 705 may specifically include the following sub-modules:

a side betweenness calculation sub-module 7051 configured to calculate betweenness of a side between applications in the classification diagram;

a second corresponding side deletion sub-module 7052 configured to delete a side corresponding to a maximum betweenness value to obtain classification sub-diagrams;

a connected diagram judging sub-module 7053 configured to judge whether the classification sub-diagrams are two connected diagrams;

a return sub-module 7054 configured to return to the step of calculating betweenness of a side between applications in the classification diagram when the classification sub-diagrams are not two connected diagrams; and

a stop sub-module 7055 configured to stop further division of the classification diagram when the classification sub-diagrams are two connected diagrams.

In the embodiment of the present application, the betweenness of the side between the applications in the classification diagram is calculated by using the following formula:

$$B(e) = \frac{p}{q}$$

wherein *B(e)* is a betweenness value corresponding to a side *e; q* is the number of all shortest paths in the classification diagram; and p is the number of shortest paths including the side e.

The apparatus embodiment is basically similar to the method embodiments, and therefore is described briefly. For related parts, refer to partial descriptions in the method embodiments.

The embodiments in this specification are all described in a progressive manner, each embodiment focuses on a difference from other embodiments, and identical or similar parts in the embodiments may be obtained with reference to each other.

Those skilled in the art should understand that the embodiments of the present application may be provided as a method, an apparatus, or a computer program product. Therefore, the embodiments of the present application may be implemented as a complete hardware embodiment, a complete software embodiment, or an embodiment combining software and hardware. Moreover, the embodiments of the present application may be a computer program product implemented on one or more computer usable storage media (including, but not limited to, a magnetic disk memory, a compact disk read-only memory (CD-ROM), an optical memory, and the like) including computer-usable program code.

In a typical configuration, the computer device includes one or more processors (CPUs), an input/output interface, a network interface, and a memory. The memory may include a volatile memory, a random access memory (RAM) and/or a non-volatile memory or the like in a computer-readable medium, for example, a read-only memory (ROM) or a flash RAM. The memory is an example of the computer-readable medium. The computer-readable medium includes non-volatile and volatile media as well as movable and non-movable media, and can implement information storage by means of any method or technology. Information may be a computer-readable instruction, a data structure, and a module of a program or other data. A storage medium of a computer includes, but is not limited to, for example, a phase change memory (PRAM), a static random access memory (SRAM), a dynamic random access memory (DRAM), other types of RAMs, a ROM, an electrically erasable programmable read-only memory (EEPROM), a flash memory or other memory technologies, a CD-ROM, a digital versatile disc (DVD) or other optical storages, a cassette tape, a magnetic tape/magnetic disk storage or other magnetic storage devices, or any other non-transmission medium, and can be used to store information that can be accessed by a computing device. According to the definition in this specification, the computer-readable medium does not include computer-readable transitory media, such as a modulated data signal and a carrier.

The embodiments of present application are described with reference to flowcharts and/or block diagrams with reference to the method, terminal device (system) and computer program product according to the embodiments of the present application. It should be understood that a computer program instruction may be used to implement each process and/or block in the flowcharts and/or block diagrams and combinations of processes and/or blocks in the flowcharts and/or block diagrams. These computer program instructions may be provided for a general-purpose computer, a special-purpose computer, an embedded processor, or a processor of any other programmable data processing terminal device to generate a machine, so that the instructions executed by a computer or a processor of any other programmable data processing terminal device generate an apparatus for implementing a specified function in one or more procedures in the flowcharts and/or in one or more blocks in the block diagrams.

These computer program instructions may be stored in a computer-readable memory that can instruct the computer or any other programmable data processing terminal device to work in a particular manner, so that the instructions stored in the computer-readable memory generate an artifact that includes an instruction apparatus. The instruction apparatus implements a specified function in one or more processes in the flowcharts and/or in one or more blocks in the block diagrams.

These computer program instructions may be loaded onto a computer or another programmable data processing terminal device, so that a series of operations and steps are performed on the computer or the another programmable terminal device, thereby generating computer-implemented processing. Therefore, the instructions executed on the computer or the programmable terminal device provide steps for implementing a specified function in one or more processes in the flowcharts and/or in one or more blocks in the block diagrams.

Although preferred embodiments of the present application have been described, those skilled in the art can make extra changes and modifications to these embodiments once they learn the basic inventive concept. Therefore, the claims appended below are intended to be construed as to cover the preferred embodiments and all changes and modifications falling within the scope of the embodiments of the present application.

Finally, it should be further noted that the relation terms herein such as first and second are merely used to distinguish one entity or operation from another entity or operation, but do not necessarily require or imply such an actual relation or sequence between the entities or operations. Moreover, the term "include", "comprise", or any other variant thereof is intended to cover a non-exclusive inclusion, so that a process, a method, an article, or a terminal device that includes a list of elements not only includes those elements but also includes other elements which are not expressly listed, or further includes elements inherent to such process, method, article, or terminal device. Unless otherwise specified, an element limited by "include a/an..." does not exclude other same elements existing in the process, the method, the article, or the terminal device that includes the element.

An application classification method and an application classification apparatus provided in the present application are described above in detail. Although the principles and implementation manners of the present application are described by using specific examples in this specification, the foregoing descriptions of the embodiments are only intended to help understand the method and core idea of the method of the present application. Meanwhile, persons of ordinary skill in the art may make variations to the specific implementations and application range according to the idea of the present application. In conclusion, the content of the specification should not be construed as a limitation to the present application.

**Claims**

1. An application classification method, comprising:

   calculating a correlation coefficient between to-be-classified applications, wherein the to-be-classified applications are located in one or more known classification systems;
   constructing a node diagram for the to-be-classified applications based on the correlation coefficient; and
   dividing the node diagram to obtain one or more classification diagrams.

2. The method according to claim 1, wherein the step of calculating a correlation coefficient between to-be-classified applications comprises:

   separately determining a shortest path between any two to-be-classified applications in the one or more known classification systems; and
   calculating a correlation coefficient between the any two to-be-classified applications by using the shortest path.

3. The method according to claim 2, wherein the correlation coefficient between the any two to-be-classified applications is calculated by using the following formula:

$$w(a,b) = \frac{1}{n} * \sum_{n=1}^{n} (\frac{2}{shortes\_path(a,b)})$$

   wherein *w(a,b)* is a correlation coefficient between to-be-classified applications *a* and *b;* n is the number of known classification systems; and
   *shortest_path(a,b)* is a shortest path between the to-be-classified applications *a* and *b* in a known classification system.

4. The method according to claim 2 or 3, wherein the step of constructing a node diagram for the to-be-classified applications based on the correlation coefficient comprises:

   using the correlation coefficient as a weight of a side between the to-be-classified applications; and
   constructing the node diagram for the to-be-classified applications based on the weight of the side.

5. The method according to claim 4, wherein the step of dividing the node diagram to obtain one or more classification diagrams comprises:

   judging whether a weight of a side in the node diagram is greater than a preset threshold;
   retaining the corresponding side if the weight of the side is greater than the preset threshold, or deleting the corresponding side to obtain a new node diagram if the weight of the side is not greater than the preset threshold; and
   dividing the new node diagram to obtain the one or more classification diagrams.

6. The method according to claim 5, wherein the step of dividing the new node diagram to obtain the one or more classification diagrams comprises:

   configuring a label for each to-be-classified application in the new node diagram;
   transferring the label of each to-be-classified application to a connected to-be-classified application;
   selecting, in labels received by each to-be-classified application, a label as an owned label based on the number of the labels;
   judging, in the new node diagram, whether a label owned by a to-be-classified application changes, or whether the current number of iteration times is less than a preset maximum number of iteration times; and
   returning to the step of transferring the label of each to-be-classified application to a connected to-be-classified application if the label owned by the to-be-classified application changes or the current number of iteration times is less than the preset maximum number of iteration times; or
   putting to-be-classified applications owning the same label to the same classification diagram to obtain the one or more classification diagrams if the label owned by the to-be-classified application does not change or the current number of iteration times is not less than the preset maximum number of iteration times.

7. The method according to claim 1 or 2 or 3 or 5 or 6, further comprising:

merging the one or more classification diagrams; or
further dividing the one or more classification diagrams.

8. The method according to claim 7, wherein the step of further dividing the one or more classification diagrams comprises:

calculating betweenness of a side between applications in the classification diagram;
deleting a side corresponding to a maximum betweenness value to obtain classification sub-diagrams;
judging whether the classification sub-diagrams are two connected diagrams; and
returning to the step of calculating betweenness of a side between applications in the classification diagram if the classification sub-diagrams are not two connected diagrams; or
stopping further division of the classification diagram if the classification sub-diagrams are two connected diagrams.

9. The method according to claim 8, wherein the betweenness of the side between the applications in the classification diagram is calculated by using the following formula:

$$B(e) = \frac{p}{q}$$

wherein $B(e)$ is a betweenness value corresponding to a side $e$; $q$ is the number of all shortest paths in the classification diagram; and p is the number of shortest paths comprising the side e.

10. An application classification apparatus, comprising:

a correlation coefficient calculation module configured to calculate a correlation coefficient between to-be-classified applications, wherein the to-be-classified applications are located in one or more known classification systems;
a node diagram construction module configured to construct a node diagram for the to-be-classified applications based on the correlation coefficient; and
a node diagram division module configured to divide the node diagram to obtain one or more classification diagrams.

11. The apparatus according to claim 10, wherein the correlation coefficient calculation module comprises:

a shortest path determining sub-module configured to separately determine a shortest path between any two to-be-classified applications in the one or more known classification systems; and
a correlation coefficient calculation sub-module configured to calculate a correlation coefficient between the any two to-be-classified applications by using the shortest path.

12. The apparatus according to claim 11, wherein the correlation coefficient between the any two to-be-classified applications is calculated by using the following formula:

$$w(a,b) = \frac{1}{n} * \sum_{n=1}^{n} (\frac{2}{shortes\_path(a,b)})$$

wherein $w(a,b)$ is a correlation coefficient between to-be-classified applications $a$ and $b$;
n is the number of known classification systems; and
$shortest\_path(a,b)$ is a shortest path between the to-be-classified applications $a$ and $b$ in a known classification system.

**13.** The apparatus according to claim 11 or 12, wherein the node diagram construction module comprises:

a node diagram construction sub-module configured to use the correlation coefficient as a weight of a side between the to-be-classified applications, and construct the node diagram for the to-be-classified applications based on the weight of the side.

**14.** The apparatus according to claim 13, wherein the node diagram division module comprises:

a side weight judging sub-module configured to judge whether a weight of a side in the node diagram is greater than a preset threshold;
a first corresponding side deletion sub-module configured to retain the corresponding side when the weight of the side is greater than the preset threshold, or delete the corresponding side to obtain a new node diagram when the weight of the side is not greater than the preset threshold; and
a node diagram division sub-module configured to divide the new node diagram to obtain the one or more classification diagrams.

**15.** The apparatus according to claim 14, wherein the node diagram division sub-module comprises:

a configuration unit configured to configure a label for each to-be-classified application in the new node diagram;
a transfer unit configured to transfer the label of each to-be-classified application to a connected to-be-classified application;
a selection unit configured to select, in labels received by each to-be-classified application, a label as an owned label based on the number of the labels;
a judging unit configured to judge, in the new node diagram, whether a label owned by a to-be-classified application changes, or whether the current number of iteration times is less than a preset maximum number of iteration times;
a return unit configured to return to the step of transferring, by the transfer unit, the label of each to-be-classified application to a connected to-be-classified application when the label owned by the to-be-classified application changes or the current number of iteration times is less than the preset maximum number of iteration times; and
a division unit configured to put to-be-classified applications owning the same label to the same classification diagram to obtain the one or more classification diagrams when the label owned by the to-be-classified application does not change or the current number of iteration times is greater than or equal to the preset maximum number of iteration times.

**16.** The apparatus according to claim 10 or 11 or 12 or 14 or 15, further comprising:

a classification diagram merging module configured to merge the one or more classification diagrams; and
a classification diagram division module configured to further divide the one or more classification diagrams.

**17.** The apparatus according to claim 16, wherein the classification diagram division module comprises:

a side betweenness calculation sub-module configured to calculate betweenness of a side between applications in the classification diagram;
a second corresponding side deletion sub-module configured to delete a side corresponding to a maximum betweenness value to obtain classification sub-diagrams;
a connected diagram judging sub-module configured to judge whether the classification sub-diagrams are two connected diagrams;
a return sub-module configured to return to the step of calculating betweenness of a side between applications in the classification diagram when the classification sub-diagrams are not two connected diagrams; and
a stop sub-module configured to stop further division of the classification diagram when the classification sub-diagrams are two connected diagrams.

**18.** The apparatus according to claim 17, wherein the betweenness of the side between the applications in the classification diagram is calculated by using the following formula:

$$B(e) = \frac{p}{q}$$

wherein *B(e)* is a betweenness value corresponding to a side *e; q* is the number of all shortest paths in the classification diagram; and p is the number of shortest paths comprising the side e.

Calculate a correlation coefficient between to-be-classified applications — 101

Construct a node diagram for the to-be-classified applications based on the correlation coefficient — 102

Divide the node diagram to obtain one or more classification diagrams — 103

# FIG. 1

| Featured | Top Charts | Categories | Mine | | Online Shopping | |
|---|---|---|---|---|---|---|
| | | | | | All    Malls    Group buying    Shopping guide    Cross-border online shopping | |

| | Video | Music | Radio |
|---|---|---|---|
| Photo & Video | Photo editing | Camera | Fun with pictures |
| System Tools | Security | WiFi | Browsers |
| | Input method | Optimization | File transmission |
| Social Networking | Chat | Community | Make friends |
| | Marriage & love | Anonymity | Communication |
| Life Assistant | Food & drink | Weather | Movie ticket |
| | Real estate | Housekeeping | Job search |
| Online Shopping | Malls | Group buying | Shopping guide |
| | Cross-border online shopping | Express delivery | Sale |
| Location | Map & navigation | Travel | Taxi |
| | Bus & subway | Train | Flight |

**Mobile Taobao**
38.3 MB installed by 200 million people    [Update]

**Vipshop**
24.3 MB installed by 29.72 million people    [Install]

**Suishouji**
11.4 MB installed by 21.01 million people    [Install]

**Fanli.com**
13.9 MB installed by 5.24 million people    [Install]

**Jingdong**
20.4 MB installed by 57.15 million people    [Update]

**Mogujie**
26.3 MB installed by 15.47 million people    [Install]

**Suning Tesco**
30.3 MB installed by 7.86 million people    [Install]

# FIG. 2

**FIG. 3A**

**FIG. 3B**

Separately determine a shortest path between any two to-be-classified applications in the one or more known classification systems — 401

Calculate a correlation coefficient between the any two to-be-classified applications by using the shortest path — 402

Construct a node diagram for the to-be-classified applications based on the correlation coefficient — 403

Judge whether a weight of a side in the node diagram is greater than a preset threshold — 404

Delete the corresponding side to obtain a new node diagram — 405

Divide the new node diagram to obtain the one or more classification diagrams — 406

Merge the one or more classification diagrams; or further divide the one or more classification diagrams — 407

**FIG. 4**

**FIG. 5**

**FIG. 6**

Correlation coefficient calculation
module — 701

Node diagram construction module — 702

Node diagram division module — 703

**FIG. 7**

<h1 style="text-align:center">INTERNATIONAL SEARCH REPORT</h1>

| | International application No. |
|---|---|
| | **PCT/CN2017/073867** |

**A. CLASSIFICATION OF SUBJECT MATTER**

G06F 17/30 (2006.01) i

According to International Patent Classification (IPC) or to both national classification and IPC

**B. FIELDS SEARCHED**

Minimum documentation searched (classification system followed by classification symbols)

G06F

Documentation searched other than minimum documentation to the extent that such documents are included in the fields searched

Electronic data base consulted during the international search (name of data base and, where practicable, search terms used)

CNABS, DWPI, SIPOABS, CNKI: image; application, program, APP, classify, classification, system, correlation, association, coefficient, compute, calculate, node, diagram, drawing, divide, division, partition, application store, APP store

**C. DOCUMENTS CONSIDERED TO BE RELEVANT**

| Category* | Citation of document, with indication, where appropriate, of the relevant passages | Relevant to claim No. |
|---|---|---|
| A | CN 104504140 A (CHINA UNITED NETWORK COMMUNICATIONS CORPORATION LIMITED), 08 April 2015 (08.04.2015), the whole document | 1-18 |
| A | CN 104965829 A (TENCENT TECHNOLOGY (SHENZHEN) CO., LTD.), 07 October 2015 (07.10.2015), the whole document | 1-18 |
| A | CN 102521275 A (YULONG COMPUTER TELECOMMUNICATION SCIENTIFIC (SHENZHEN) CO., LTD.), 27 June 2012 (27.06.2012), the whole document | 1-18 |
| A | US 2014324873 A1 (NEOWIZ GAMES CORPORATION et al.), 30 October 2014 (30.10.2014), the whole document | 1-18 |

| ☐ Further documents are listed in the continuation of Box C. | ☒ See patent family annex. |
|---|---|

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 17 May 2017 (17.05.2017) | **01 June 2017 (01.06.2017)** |

| Name and mailing address of the ISA/CN: State Intellectual Property Office of the P. R. China No. 6, Xitucheng Road, Jimenqiao Haidian District, Beijing 100088, China Facsimile No.: (86-10) 62019451 | Authorized officer **ZHAN, Qianqian** Telephone No.: (86-10) **62089525** |
|---|---|

Form PCT/ISA/210 (second sheet) (July 2009)

## INTERNATIONAL SEARCH REPORT
### Information on patent family members

International application No.

**PCT/CN2017/073867**

| Patent Documents referred in the Report | Publication Date | Patent Family | Publication Date |
|---|---|---|---|
| CN 104504140 A | 08 April 2015 | None | |
| CN 104965829 A | 07 October 2015 | None | |
| CN 102521275 A | 27 June 2012 | None | |
| US 2014324873 A1 | 30 October 2014 | KR 20140125675 A | 29 October 2014 |
| | | KR 1522014 B1 | 20 May 2015 |

Form PCT/ISA/210 (patent family annex) (July 2009)

**EP 3 425 523 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 201610113706